# EUROPEAN PATENT APPLICATION

(11) **EP 1 383 076 A2**
(43) Date of publication of application: **21.01.2004**
(21) Application number: 03101340.2
(22) Date of filing: 14.05.2003
(51) Int. Cl.: G06K 19/077, B42D 15/10

(54) **Identity card**

(30) Priority: 18.07.2002 DE 10232570
(71) Applicant: AGFA-GEVAERT, 2640 Mortsel (BE)
(72) Inventor: Sckmuck, Arno, D-42799, Leverkusen (DE); Geiger, Markus, D-51371, Leverkusen (DE); Vermeulen, Leo, 2640, Mortsel (BE)

(57) **Abstract**

A card with a core and at least one chip incorporated into the core, characterised in that the core consists of print material, at least 5% of at least one main surface are covered by a seal and the chip is covered on both main surfaces with a seal or a plastics layer, is distinguished by elevated anti-counterfeiting security, very good durability and elevated flexibility.

## Description

Card comprising a core and at least one chip incorporated into the core and a process for the production thereof.

It is known to produce cards which contain an electronically readable and/or writable chip. Such cards, also known as identity cards, are frequently printed, are used as payment or telephone cards and are usually produced from plastics such as for example PVC, PET or ABS. The chip comprises a digital memory component, the storage capacity of which may vary, and which may be read and/or written either via contacts brought out to the surface of the card or in contactless manner, for example via a coil.

Chips which are suitable for both the contactless variant and that comprising contacts are commercially available. However, cards made from plastics cannot be provided with high quality print and films laminated thereon can be exchanged without leaving visible traces. As a consequence, plastics cards may only inadmissibly be protected against tampering with the chip.

It is known from DE 42 18 158 to coat a plastics card with photographic layers. However, the process required for this purpose, in which the photosensitive layers of a photographic material must be peeled off from the support thereof, is highly complex.

Moreover, the stiffness of plastics cards is unpleasant for the user.

A card is described as known in DE 29 20 012 which comprises a unit consisting of a chip with support element, supply lines and external contact surfaces, wherein the unit is rigidly connected with the card. Due to the severe bending loads to which the unit is exposed, this structure is considered unsuitable for practical requirements.

The card according to the invention of DE 29 20 012 differs from the rigid structure in that the unit consisting of chip plus support element is accommodated in a cut-out which is somewhat larger than the unit and the unit is moreover retained in the cut-out by a resilient material. The cut-out is intended to be similar in outline to the support element. Preferably, the chip plus support element and contact surfaces is held in the window by cover films laminated onto both sides, wherein the cover film must have punched out portions over the contact surfaces. In order to avoid damaging the chip, which, via the contact surfaces, is in direct thermal contact with the cover films, only cold lamination can be used to apply the films. Films laminated in this manner may, however, be more readily detached than hot-laminated films. In addition, according to DE 29 20 012, the cover films must be stiff, so resulting in unpleasantly rigid cards.

US 4,457,798 discloses a process which involves treating the card inlay at one point in such a manner that a subsequently hot-laminated film does not adhere at this point. This point is then punched out in such a manner that the film remains undamaged and the chip module is inserted and firmly adhered in the resultant indentation. While the process does indeed make it possible to hot-laminate films onto the card inlay, the chip and the contact surfaces are, however, inadequately protected. In addition, residual release agent frequently results in detachment of the cover film and the process is highly elaborate.

The identity cards described in DE 30 299 39 contain an IC component plus support element and connection lines, which component is laminated into the card composite and is bonded with the card on all sides and over its entire surface. In order to make it possible to use hot lamination for this purpose without destroying the chip, the latter must be protected by buffer zones.

While the resultant identity cards do indeed exhibit resistant cover layers, anti-counterfeiting security is still unsatisfactory. In particular, print quality is inadequate.

Known cards do not meet the elevated anti-counterfeiting security requirements of identity cards. For example, the cover films may too easily be removed without damaging the card body, so making it possible to tamper with the chip and other security features and too few different security features are possible.

A further disadvantage of known cards is the inadequate durability thereof, which results in detachment of the cover layer after some time, so in turn permitting tampering. In particular, it is then no longer possible to tell whether the card has been tampered with or has simply been exposed to particularly severe use.

Furthermore, prior art cards are very stiff, contacts brought to the surface are readily worn away and manufacture is very elaborate and thus costly.

The object of the invention was accordingly to eliminate the stated disadvantages. Surprisingly, this is achieved with a card which comprises a core of print material and is provided with a seal.

The present invention accordingly provides a card with a core and at least one chip incorporated into the core, characterised in that the core consists of photographic print material, at least 5% of at least one main surface are covered by a seal and the chip is covered on both main surfaces with a seal or a plastics layer.

Photographic print materials are in particular materials for reflection prints or displays, which most usually exhibit a positive image. They are thus not a recording material like colour photographic films. They predominantly comprise negative-working materials.

Colour photographic print materials conventionally contain on a support at least one red-sensitive silver halide emulsion layer containing at least one cyan coupler, at least one green-sensitive silver halide emulsion layer containing at least one magenta coupler and at least one blue-sensitive silver halide emulsion layer containing at least one yellow coupler.

A card should be taken to mean a three-dimensional article, in which two sides occupy a substantially larger area than the other sides. Examples of such cards are telephone cards, credit cards, parking cards or identity cards. The two sides having the larger area are denoted the main sides or main surfaces of the card and the sides with the smaller areas the edges or margins. The dimensions of a card are rigidly standardised for many applications and may otherwise be selected at will. Although standardised cards are usually rectangular, they may also be of a different shape, such as for example square, round, hexagonal etc..

The card preferably has an image produced with the photographic print material.

According to the invention, an image is any kind of reproduction, i.e. also of text and patterns. The reproduction may be coloured, black & white, invisible or a combination thereof. Invisible reproductions may be rendered visible by infrared and/or UV light.

The photographic coating may be present on one side or both sides and, in the case of coating on both sides, the main surfaces may mutually independently bear one or more layers, which may also be different. A coating should be taken to mean one or more layers.

Coating particularly preferably proceeds by the continuous flooding process, in which the layer or layers are poured as a solution or dispersion, in particular as an aqueous solution or dispersion, onto a support and then dried, wherein two or more layers are preferably applied in a one pass. In the case of flooding, in particular for two or more layers, cascade and curtain coaters are particularly suitable.

It is frequently preferred to provide the two main surfaces of the support with different coatings in order to be able to create a greater diversity of image information, wherein according to the invention and in the event of optionally desired printing on the reverse side it is also even advantageous to provide a photographic coating on only one main surface.

In an advantageous embodiment, a paper coated on both sides with plastics is used as a support and a plastics material which is particularly suitable for this purpose is polyethylene.

The chip preferably comprises an integrated circuit on which information can be stored digitally, wherein the data may particularly preferably be read from and/or written to the chip in contactless manner. Among preferred contactless variants such as for example optical, capacitive or inductive data transfer, it is the inductively operated chips with a coil, in particular those known as "coil on chip", in which the coil is arranged directly on the chip, which have proved particularly advantageous for the cards according to the invention. This chip has proved to be particularly stable in particular in the case of hot lamination with plastics films. Suitable "coil on chip" products are for example RFID chips from Maxell in which the antenna coil is integrated on the chip.

The chip is located in a recess of the core, which recess is either the same size as or larger than the chip to be inserted.

The higher the quality of the image producible or produced on the card, the more difficult it is unnoticeably to peel off a seal or a plastics layer applied thereon. Even if the support itself is not damaged, parts of the image remain stuck to the film and the card can no longer be stuck back down unnoticeably.

In an advantageous embodiment, the core accordingly comprises on at least one main surface at least one image-receiving layer which enables a particularly high quality image. The core preferably comprises a colour photographic paper, in which the support, in particular plastics-coated on both sides, used to produce the card comprises at least one blue-sensitive, yellow-coupling silver halide emulsion layer, at least one green-sensitive, magenta-coupling silver halide emulsion layer and at least one red-sensitive, cyan-coupling silver halide emulsion layer and the finished card contains an image produced with these photographic layers.

Particularly advantageous cards according to the invention have, for example, supports which comprise photographic layers on both sides, or which comprise a photographic coating on one main surface and an image-receiving or image-forming layer on the other.

An image-receiving coating preferably comprises at least one non-swellable, microporous layer or a swellable, in particular gelatine-containing layer, which is capable of particularly readily accepting ink, for example from inkjet printers. Preferred layers are furthermore those which readily accept toner, for example from laser printers. Other advantageous image-receiving layers are those which particularly readily accept printing inks, for example those for screen printing, offset printing, intaglio and flexographic printing, which are particularly good receiving layers for thermal sublimation printing, thermal transfer printing or the silver salt diffusion process.

Apart from photographic layers, image-forming layers are taken to be layers which contain a photosensitive or heat-sensitive silver salt emulsion or precursor substances for the thermoautochrome process or microcapsules, for example for cylithography.

If only one of the main surfaces of the support is provided with a swellable layer, for example containing gelatine, it may be advantageous to apply onto the reverse side a "non-curling" layer which counteracts unwanted bending. Said layer may preferably comprise an image-receiving gelatine-containing layer. The non-curling layer is particularly preferred for supports which are colour photographically coated on one side.

It has proved advantageous to provide the card with at least one antistatic layer, as read and write operations proceed substantially more reliably as a result. In unfavourable cases, the data on the chip or even the chip itself may be destroyed in the absence of an antistatic layer. Suitable antistatic additives are described, for example, in part IX.C of Research Disclosure 38957, 1996.

Permanent, polythiophene-based antistatic layers, as are for example described in EP 340 512, EP 440 957 and DE 4 211 459, are particularly preferred.

In an advantageous embodiment of the invention, the print material used to produce the card permits a high-quality image with a resolution of at least 6 lines per mm, in particular of 8 lines per mm.

If the high quality image is, for example a portrait photograph of an individual, in particular a colour photograph, the card according to the invention is ideally suitable as an identity card.

The seal may for example be colourless, coloured or printed, is preferably thinner than the paper core and advantageously consists of materials which can be processed to yield foils/films, such as for example metals or plastics, wherein plastics and in particular transparent materials are particularly advantageous. The seal itself may also contain security features, such as for example a hologram. By appropriate selection of the material or the coating thereof, it is possible to attenuate with the seal the sensitivity of the chip to data transmitted in contactless manner, in order for example to prevent unintentional addressing over long distances or due to interference signals. Plastics films with a vapour-deposited metal coating are particularly suitable for this purpose. The seal may be bonded to the core for example using cold or hot-melt adhesives, wherein pressure may also be applied. The seal is particularly preferably coated with a hot-melt adhesive and is bonded to the print material with application of heat and pressure.

The seal preferably covers a security feature and/or the recess in which the chip is accommodated on at least one main surface and particularly preferably on both main surfaces.

In this manner, the security feature and/or the chip may be provided with particularly effective protection from tampering, in particular if the adhesion between the layers of the card is selected such that the adhesion between the seal and print material is stronger than the cohesion within the support and/or stronger than the adhesion between the layers of the print material. In this manner, the support and in particular the photographic layers arranged thereon are inevitably destroyed if the seal is removed.

A particularly advantageous seal is one which is at least 5% and in particular at least 40% smaller than the main surface of the card and which more preferably at no point on the main surface extends to the edge of the card. It consequently does not become detached so readily when exposed to flexural stress. In a particularly advantageous embodiment, the seal exhibits fine structures.

Particularly outstanding anti-counterfeiting security is achieved with a card, the print material of which contains at least one recess with fine structures and the recess is covered with the seal on at least one side, still better on both sides. It is particularly advantageous here if the chip is accommodated in such a recess.

The fine structures in the core may, for example, be produced by punching a correspondingly structured recess through the entire core. Preferably, however, the core consists of two or more plies of films, wherein one or more of these films comprise recesses with fine structures. In the case of such a layer structure of the core, the fine structures are particularly preferably arranged in the outer films. The fine structures may be produced, instead of by punching, by any other method suitable for this purpose, for example also by cutting or by laser.

The punched out portions for the chip, which are conventionally adapted to the shape of the support element, i.e. are round or rectangular, do not ensure optimum protection from unauthorised peeling of the film. In contrast, in the case of punched out portions with fine structures, such peeling is immediately obvious as the structures are inevitably torn out.

In a further particularly advantageous embodiment of the invention, both the seal and at least one recess in the card core exhibit fine structures, wherein these elements in particular at least partially overlap.

Fine structures of the seal and the recess should be taken to mean, for example, "sawteeth" and/or narrow strips and/or small patterns, such as for example steps.

The sawteeth preferably have an acute angle of less than 90°, in particular of less than 60° and particularly preferably of less than 40° and the strips and the small patterns preferably have a thickness of less than 5 mm, in particular of less than 3 mm and particularly preferably of less than 2 mm.

In an advantageous embodiment, the entire edge length of the seal and/or of the recess is at least 20%, preferably at least 50% and particularly preferably at least 100% larger than in the case of a circular embodiment of identical area.

The seal and/or the recess is particularly preferably irregular, as a result of which it may act as a watermark if the card is held up against the light.

Further advantages with regard to the durability and anti-counterfeiting security of the card are obtained if the card is covered on at least one main surface at least over its entire area with a plastics layer and in particular when it is covered on both main surfaces with a plastics layer which projects beyond all the card's edges and these projecting margins of the two layers are welded together.

The plastics layer covering the entire area is particularly advantageously arranged over a seal which is smaller than the main surface.

In a further advantageous embodiment, the seal and the plastics layer covering the seal consist of different materials and/or the seal exhibits greater adhesion to the paper core than it does to the plastics layer arranged over the seal.

Both the seal and the plastics layers according to the invention may be provided with UV protection and comprise an image.

The cards according to the invention are preferably provided with further security features, such as for example a magnetic strip, signature strips, guilloche patterns, microprint, UV print, UV markers, holograms, kinegrams, laser images, watermarks, embossing, laser gravure, interference gratings, IR-readable symbols, thermochrome features, fluorescent pigments, release lacquers, predetermined breaking points and scoring in the plastics layers, the seal or the remaining security features.

IR-readable symbols may be produced in a particularly simple and high quality manner by means of a photographic layer if processing is controlled in such a manner that not all the silver is bleached. The metallic silver which remains in accordance with the image has very good IR readability.

An interference grating, which is preferably similar to that described in DE 198 17 105, may preferably be arranged on the front and reverse sides of a seal, on two seals covering a recess, on a seal and a plastics layer located thereover or on the front and reverse sides of a plastics layer. Another preferred arrangement on the front and reverse sides of the main surfaces is possible if a transparent material is used as the support. If the grating is produced by photographic layers, the front and reverse sides may be separately addressed in the case of different spectral sensitisation. The interference grating comprises closely spaced superimposed grids of lines or other fine patterns which form a changing moiré pattern when the card is bent or flexed.

The release lacquers are capable of reducing the adhesion of localised areas of the main surface to the seal and/or a plastics layer and/or of reducing adhesion within the support in order to render uniform detachment of seal and/or plastics layer still more difficult.

The present invention also provides a process for the production of a card according to the invention, characterised in that an image is produced with the print material, a recess for the chip is then created, the chip is inserted once the recess has been covered on one side with the seal and then the second side of the recess is covered with the seal or a plastics layer.

Production of the image is adapted to the above-described variants according to the invention of the photographic print material or the optionally image-forming or image-receiving reverse side thereof and may proceed, for example, by means of laser printers, inkjet printers, thermal sublimation printing, thermal printers or exposure with an image.

In addition to the advantages already described, the seal is also highly advantageous for the manufacturing process, in particular if it covers less than 50% of the main surface and does not extend to the edge of the card at any point. Since the smaller seal need not be exactly flush with the edges of the card, it may be applied much more simply and rapidly. In addition, if it is coated with a suitable adhesive, the seal can fix the chip and thus simplify subsequent manufacturing steps. Card production may consequently be automated straightforwardly.

Further preferred embodiments of the invention are disclosed in the claims.

Examples of photographic print materials are photographic black & white paper, colour photographic paper, colour reversal photographic paper, colour-sensitive materials for the dye diffusion transfer process or the silver dye bleaching process. A review may be found in Research Disclosure 37038 (1995) and Research Disclosure 38957 (1996).

The photographic materials consist of a support, onto which at least one photosensitive silver halide emulsion layer is applied. Suitable supports are in particular thin films and sheets. A review of support materials and auxiliary layers applied to the front and reverse sides thereof is given in Research Disclosure 37254, part 1 (1995), page 285 and in Research Disclosure 38957, part XV (1996), page 627.

The colour photographic materials conventionally contain at least one red-sensitive, one green-sensitive and one blue-sensitive silver halide emulsion layer, optionally together with interlayers and protective layers.

Depending upon the type of photographic material, these layers may be differently arranged.

Colour photographic paper, which is usually substantially less photosensitive than a colour photographic film, conventionally has on the support, in the stated sequence, one blue-sensitive, yellow-coupling silver halide emulsion layer, one green-sensitive, magenta-coupling silver halide emulsion layer and one red-sensitive, cyan-coupling silver halide emulsion layer; a yellow filter layer may be omitted.

The number and arrangement of the photosensitive layers may be varied in order to achieve specific results.

The substantial constituents of the photographic emulsion layers are binder, silver halide grains and colour couplers.

Details of suitable binders may be found in Research Disclosure 37254, part 2 (1995), page 286 and in Research Disclosure 38957, part II.A (1996), page 598.

Details of suitable silver halide emulsions, the production, ripening, stabilisation and spectral sensitisation thereof, including suitable spectral sensitisers, may be found in Research Disclosure 37254, part 3 (1995), page 286, in Research Disclosure 37038, part XV (1995), page 89 and in Research Disclosure 38957, part V.A (1996), page 603.

Photographic print materials contain either silver chloride-bromide emulsions containing up to 80 mol% of AgBr or silver chloride-bromide emulsions containing above 95 mol% of AgCl.

Details of colour couplers may be found in Research Disclosure 37254, part 4 (1995), page 288, in Research Disclosure 37038, part II (1995), page 80 and in Research Disclosure 38957, part X.B (1996), page 616. The maximum absorption of the dyes formed from the couplers and the colour developer oxidation product is preferably within the following ranges: yellow coupler 430 to 460 nm, magenta coupler 540 to 560 nm, cyan coupler 630 to 700 nm.

Colour couplers, which are usually hydrophobic, as well as other hydrophobic constituents of the layers, are conventionally dissolved or dispersed in high-boiling organic solvents. These solutions or dispersions are then emulsified into an aqueous binder solution (conventionally a gelatine solution) and, once the layers have dried, are present as fine droplets (0.05 to 0.8 µm in diameter) in the layers.

Suitable high-boiling organic solvents, methods for the introduction thereof into the layers of a photographic material and further methods for introducing chemical compounds into photographic layers may be found in Research Disclosure 37254, part 6 (1995), page 292.

The non-photosensitive interlayers generally arranged between layers of different spectral sensitivity may contain agents which prevent an undesirable diffusion of developer oxidation products from one photosensitive layer into another photosensitive layer with a different spectral sensitisation.

Suitable compounds (white couplers, scavengers or DOP scavengers) may be found in Research Disclosure 37254, part 7 (1995), page 292, in Research Disclosure 37038, part III (1995), page 84 and in Research Disclosure 38957, part X.D (1996), pages 621 et seq..

The photographic material may also contain UV light absorbing compounds, optical brighteners, spacers, filter dyes, formalin scavengers, light stabilisers, antioxidants, Dₘᵢₙ dyes, plasticisers (latices), biocides and additives to improve coupler and dye stability, to reduce colour fogging and to reduce yellowing, and others. Suitable compounds may be found in Research Disclosure 37254, part 8 (1995), page 292, in Research Disclosure 37038, parts IV, V, VI, VII, X, XI and XIII (1995), pages 84 et seq. and in Research Disclosure 38957, parts VI, VIII, IX and X (1996), pages 607 and 610 et seq..

The layers of photographic materials are conventionally hardened, i.e. the binder used, preferably gelatine, is crosslinked by appropriate chemical methods.

Suitable hardener substances may be found in Research Disclosure 37254, part 9 (1995), page 294, in Research Disclosure 37038, part XII (1995), page 86 and in Research Disclosure 38957, part II.B (1996), page 599.

Once exposed with an image, photographic materials are processed using different processes depending upon their nature. Details relating to processing methods and the necessary chemicals are disclosed in Research Disclosure 37254, part 10 (1995), page 294, in Research Disclosure 37038, parts XVI to XXIII (1995), pages 95 et seq. and in Research Disclosure 38957, parts XVIII, XIX and XX (1996), pages 630 et seq. together with example materials.

## Claims

1. A card with a core and at least one chip incorporated into the core, **characterised in that** the core consists of photographic print material, at least 5% of at least one main surface is covered by a seal and the chip is covered on both main surfaces with a seal or a plastics layer.

2. A card according to claim 1, **characterised in that** at least one seal consists of plastics.

3. A card according to one of claims 1 or 2, **characterised in that** the core comprises a plastics-coated photographic paper.

4. A card according to one of claims 1 to 3, **characterised in that** the core comprises a colour photographic paper which comprises on at least one main surface at least one blue-sensitive, yellow-coupling silver halide emulsion layer, at least one green-sensitive, magenta-coupling silver halide emulsion layer and at least one red-sensitive, cyan-coupling silver halide emulsion layer.

5. A card according to one of claims 1 to 4, **characterised in that** it is provided on at least one main surface with a seal which is at least 5% smaller than the main surface.

6. A card according to claim 5, **characterised in that** the seal extends at no point to the edge of the card.

7. A card according to one of claims 1 to 6, **characterised in that** the seal covers the recess for the chip on at least one side.

8. A card according to one of claims 1 to 7, **characterised in that** the core contains at least one recess with fine structures.

9. A card according to claim 8, **characterised in that** the chip is accommodated in the recess.

10. A card according to one of claims 1 to 9, **characterised in that** the card is covered on at least one main surface at least over its entire area with a plastics layer.

11. A card according to claim 10, **characterised in that** the card is covered on both main surfaces with a plastics layer which projects beyond all the card's edges and the projecting margins of the two layers are welded together.

12. A process for the production of an identity card, **characterised in that** an image is produced on a core of print material, a recess for the chip is then created, the chip is inserted once the recess has been covered on one side with a seal, which amounts to at least 5% of the main surface, and then the second side of the recess is covered with a seal or a plastics layer.
